# EUROPÄISCHE PATENTANMELDUNG

(11) **EP 4 835 045 A1**
(43) Veröffentlichungstag der Anmeldung: **04.11.2026**
(21) Anmeldenummer: 26173448.7
(22) Anmeldetag: 20.04.2026
(51) Int. Cl.: C12C 12/04, C12F 3/04, C12G 3/08, C12G 3/025, C12H 1/02, C12H 1/044, C12H 3/00

(54) **VERFAHREN ZUR AROMATISIERUNG VON ZUMINDEST TEILWEISE ENTALKOHOLISIERTEN GETRÄNKEN**

(30) Priorität: 28.04.2025 LU 509925
(71) Anmelder: Neisius, Jürgen, 54421 Reinsfeld (DE)
(72) Erfinder: Neisius, Jürgen, 54421 Reinsfeld (DE)
(74) Vertreter: Zeiner, Johannes Michael

(57) **Zusammenfassung**

Die vorliegende Erfindung betrifft ein Verfahren zur Aromatisierung eines zumindest teilweise entalkoholisierten Getränks. Dabei wird eine Mischung, die einen Alkohol und mindestens einen weiteren Bestandteil enthält, mit einem Zeolithen in Kontakt gebracht. Der dabei erhaltene Strom, der zumindest Teile des mindestens einen weiteren Bestandteils enthält, wird dann mit einem zumindest teilweise entalkoholisierten Getränk gemischt unter Erhalt eines aromatisierten zumindest teilweise entalkoholisierten Getränks. Darüber hinaus betrifft die vorliegende Erfindung ein aromatisiertes zumindest teilweise entalkoholisiertes Getränk erhältlich nach dem erfindungsgemäßen Verfahren.

## Beschreibung

Die vorliegende Erfindung betrifft ein Verfahren zur Aromatisierung eines zumindest teilweise entalkoholisierten Getränks. Dabei wird eine Mischung, die einen Alkohol und mindestens einen weiteren Bestandteil enthält, mit einem Zeolithen in Kontakt gebracht. Der dabei erhaltene Strom, der zumindest Teile des mindestens einen weiteren Bestandteils enthält, wird dann mit einem zumindest teilweise entalkoholisierten Getränk gemischt unter Erhalt eines aromatisierten zumindest teilweise entalkoholisierten Getränks. Darüber hinaus betrifft die vorliegende Erfindung ein aromatisiertes zumindest teilweise entalkoholisiertes Getränk erhältlich nach dem erfindungsgemäßen Verfahren.

EP 3 875 569 A1 offenbart ein Verfahren zur Herstellung einer gegorenen Mischung durch alkoholische Gärung einer gärfähigen Mischung. Dabei wird ein Gasstrom erhalten, der zumindest teilweise in die gegorene Mischung rückgeführt werden kann, um einen Verlust von im Gasstrom enthaltenen Bestandteilen zu minimieren. Vor Rückführung kann der Gasstrom gegebenenfalls von einzelnen darin enthaltenen Komponenten getrennt werden.

Eine Möglichkeit ein zumindest teilweise entalkoholisiertes Getränk zu aromatisieren wird nicht beschrieben.

Aus Lisanti et al, Food Bioprocess Technol (2013) 6:2289-2305, Schmitt et al., BIO Web of Conferences 68, 02006 (2023) und Schmitt et al., BIO Web of Conferences 56, 02007 (2023) ist bekannt, dass durch Entalkoholisierung von Weinen deren Geschmack und Geruch gegenüber dem nicht entalkoholisierten Wein verändert wird. Häufig nimmt die Geruchs- und Geschmacksintensität von zumindest einzelnen Aromen ab.

US 5,308,631 A beschreibt ein Verfahren zur Herstellung von alkoholfreiem Bier, bei dem alkoholhaltiges Bier über einen Zeolith geleitet wird. Dabei werden Alkohol und Aromastoffe am Zeolith absorbiert. Diese können anschließend desorbiert und voneinander getrennt werden, sodass die nun vom Alkohol befreiten Aromastoffe dem Bier wieder zugeführt werden können unter Erhalt eines alkoholfreien Biers mit guten Aromaeigenschaften.

JP S63 304973 A beschreibt die Abtrennung von Estern mit einem Zeolith, die Ester werden mit Hilfe von Ethanol vom Zeolith desorbiert.

US 2023/131638 A1 beschreibt ein Verfahren zur Dealkoholisierung eines alkoholhaltigen Getränks, bei dem ein alkoholhaltiger Strom abgeführt und anschließend über eine Absorberkolonne geführt wird. Dabei wird Ethanol an der Kolonne absorbiert, die übrigen Bestandteile können zur Aromatisierung in das Getränk rückgeführt werden. Die Absorberkolonne kann Zeolithe enthalten.

Die im Stand der Technik beschriebenen Verfahren zur Abtrennung von Aromastoffen von Alkohol und/oder für die Aromatisierung von entalkoholisierten Getränken sind oftmals sehr aufwändig und daher kostenintensiv.

Aufgabe der vorliegenden Erfindung war es daher, ein Verfahren zur Aromatisierung von zumindest teilweise entalkoholisierten Getränken bereitzustellen. Das Verfahren sollte den Alkoholgehalt des zumindest teilweise entalkoholisierten Getränks insbesondere nur geringfügig oder sogar gar nicht ändern.

Gelöst wurde diese Aufgabe durch ein Verfahren zur Aromatisierung eines zumindest teilweise entalkoholisierten Getränks umfassend die folgenden Schritte a) bis c)
a) Bereitstellen einer Mischung enthaltend einen Alkohol und mindestens einen weiteren Bestandteil ausgewählt aus der Gruppe bestehend aus Alkoholen, Terpenoiden, Estern, Aldehyden, Ketonen, Pyrazinen und Thiolen,
b) in Kontakt bringen der in Schritt a) bereitgestellten Mischung mit einem Zeolithen unter Erhalt eines Stroms, der zumindest Teile des mindestens einen weiteren Bestandteils enthält,
c) Mischen von zumindest einem Teil des in Schritt b) erhaltenen Stroms mit einem zumindest teilweise entalkoholisierten Getränk unter Erhalt eines aromatisierten zumindest teilweise entalkoholisierten Getränks.

Es wurde überraschend gefunden, dass mit dem erfindungsgemäßen Verfahren Alkohol aus der Mischung entfernt werden kann, sodass sich der Alkoholgehalt des zumindest teilweise entalkoholisierten Getränks nicht oder nur geringfügig ändert bei der Aromatisierung.

Darüber hinaus ist das erfindungsgemäße Verfahren besonders vorteilhaft, da es erlaubt, den Verlust von Aromastoffen, die Geruch und Geschmack des zumindest teilweise entalkoholisierten Getränks beeinflussen, auszugleichen. Bei der Entalkoholisierung gehen häufig Aromastoffe verloren, sodass der Geruch und Geschmack des zumindest teilweise entalkoholisierten Getränks deutlich verändert sind gegenüber dem alkoholhaltigen Getränk. In einer besonders bevorzugten Ausführungsform der Erfindung ist es möglich, einen Gasstrom, der bei der Herstellung einer gegorenen Mischung entsteht, als Mischung in Schritt a) einzusetzen. Dies ist besonders vorteilhaft, da dieser Gasstrom viele der im eigentlichen alkoholhaltigen Getränk enthaltenen Bestandteile enthält. Diese können mit dem erfindungsgemäßen Verfahren dem zumindest teilweise entalkoholisierten Getränk zugeführt werden und so dessen Geruch und Geschmack verbessern.

Nachfolgend wird die vorliegende Erfindung näher beschrieben.

In Schritt a) des erfindungsgemäßen Verfahrens wird eine erste Mischung bereitgestellt, die einen Alkohol und mindestens einen weiteren Bestandteil ausgewählt aus der Gruppe bestehend aus Alkoholen, Terpenoiden, Estern, Aldehyden, Ketonen, Pyrazinen und Thiolen enthält.

Der in der Mischung enthaltene Alkohol ist beispielsweise ausgewählt aus der Gruppe bestehend aus Ethanol, Propanol, Butanol, Isobutanol, Isoamylalkohol, Hexanol, 2-Phenylethylalkohol, Glycerol, 4-Ethylphenol, 4-Ethylguaiacol, 4-Vinylphenol und 4-Vinylguaiacol. Bevorzugt ist der in der ersten Mischung enthaltene Alkohol Ethanol.

Bevorzugt ist daher auch ein Verfahren, bei dem der Alkohol in Schritt a) Ethanol ist.

"Mindestens ein weiterer Bestandteil" bedeutet im Rahmen der vorliegenden Erfindung sowohl genau ein weiterer Bestandteil als auch eine Mischung aus zwei oder mehreren weiteren Bestandteilen. Zwei oder mehrere weitere Bestandteile sind bevorzugt.

Der mindestens eine weitere Bestandteil wird im Rahmen der vorliegenden Erfindung auch als Aromastoff bezeichnet. Die Begriffe "Aromastoff" und "mindestens ein weiterer Bestandteil" werden daher im Rahmen der vorliegenden Erfindung synonym gebraucht und haben somit die gleiche Bedeutung

Umfasst der mindestens eine weitere Bestandteil Alkohole, so ist dem Fachmann klar, dass diese Alkohole von dem Alkohol, der in der Mischung enthalten ist, verschieden sind. Wenn der mindestens eine weitere Bestandteil Alkohole umfasst, so sind diese Alkohole beispielsweise ausgewählt aus der Gruppe bestehend aus Ethanol, Propanol, Butanol, Isobutanol, Isoamylalkohol, Hexanol, 2-Phenylethylalkohol, Glycerol, 4-Ethylphenol, 4-Ethylguaiacol, 4-Vinylphenol und 4-Vinylguaiacol. Bevorzugt sind die Alkohole dann ausgewählt aus der Gruppe bestehend aus Propanol, Butanol, Isobutanol, Isoamylalkohol, Hexanol, 2-Phenylethylalkohol, Actinidol, Glycerol, 4-Ethylphenol, 4-Ethylguaiacol, 4-Vinylphenol und 4-Vinylguaiacol.

Terpenoide sind beispielsweise ausgewählt aus der Gruppe bestehend aus Linalool, Geraniol, Nerol, Citronellol, Hotrienol, cis-Rosenoxid, α-Terpineol, Vitispiran, 1,1,6-Trimethyl-1,2-dihydronaphthalin (TDN) und Neroloxid.

Ester sind beispielsweise ausgewählt aus der Gruppe bestehend aus Ethylacetat, Isoamylacetat, 2-Phenylethylacetat, Isobutylacetat, Hexylacetat, Ethylbutanoat, Ethylhexanoat, Ethyloctanoat, Weinlacton und Ethyldecanoat.

Aldehyde sind beispielsweise Acetaldehyd, Hexanal und (E)-2-Hexenal.

Ketone sind beispielsweise ausgewählt aus der Gruppe bestehend aus (E)-β-Damascenon, β-Ionon, Diacetyl, 2-Acetyl-1-pyrroline und 2-Acetyltetrahydropyridin.

Pyrazine sind beispielsweise Methoxypyrazine. Methoxypyrazine sind dem Fachmann bekannt und beispielsweise ausgewählt aus der Gruppe bestehend aus 2-Methoxy-3-isobutylpyrazin, 2-Methoxy-3-ispropylpyrazin, 2-Methoxy-3-sec-butylpyrazin und 2-Methoxy-3-ethylpyrazin.

Thiole sind beispielsweise ausgewählt aus der Gruppe bestehend aus 4-Mercapto-4-methylpentan-2-on (4MMP), 4-Mercapto-4-methylpentan-2-ol (4MMPOH), 3-Mercapto-3-methylbutan-1-ol (3MMB), 3-Mercaptohexylacetat (A3MH) und 3-Mercaptohexan-1-ol (3MH).

Die Mischung enthält vorzugsweise zusätzlich Wasser.

Die Mischung kann in flüssiger oder gasförmiger Form bereitgestellt werden.

Es ist beispielsweise möglich, dass die Mischung analog wie das in DE 10 2016 105 993 A1 beschriebene Fluid bereitgestellt wird.

In einer weiteren Ausführungsformkann die Mischung durch Gärung einer gärfähigen Mischung bereitgestellt werden. Dabei wird eine gärfähige Mischung gegoren unter Erhalt einer Flüssigphase und eines ersten Gasstroms. Dieser erste Gasstrom kann dann, gegebenenfalls nach Kondensation und/oder Aufreinigung als Mischung in Schritt a) eingesetzt werden.

Verfahren zur Gärung einer gärfähigen Mischung sind dem Fachmann als solche bekannt und beispielsweise in EP 3 875 569 A1 beschrieben.

Bevorzugt ist ein Verfahren zur Bereitstellung der Mischung in Schritt a), das die folgenden Schritte umfasst:
i. Bereitstellen einer gärfähigen Mischung in einem ersten Reaktor,
ii. Gärung der in Schritt i) bereitgestellten gärfähigen Mischung in dem ersten Reaktor bei einer ersten Temperatur (T1) für einen ersten Zeitraum (t1) unter Erhalt einer Flüssigphase und eines ersten Gasstroms, wobei die Flüssigphase eine gegorene Mischung enthält und der erste Gasstrom Kohlenstoffdioxid enthält,
iii. Überführen des in Schritt ii) erhaltenen ersten Gasstroms aus dem ersten Reaktor in einen ersten Kondensator, wobei der erste Gasstrom von der in Schritt ii) erhaltenen Flüssigphase abgetrennt wird unter Erhalt der gegorenen Mischung in dem ersten Reaktor und des ersten Gasstroms in dem ersten Kondensator, wobei der erste Gasstrom, gegebenenfalls nach Aufreinigung, die in Schritt a) bereitgestellte Mischung ist.

Bevorzugt ist daher auch ein Verfahren, bei dem die Mischung in Schritt a) erhältlich ist durch ein Verfahren umfassend die folgenden Schritte i) bis iii)
i. Bereitstellen einer gärfähigen Mischung in einem ersten Reaktor,
ii. Gärung der in Schritt i) bereitgestellten gärfähigen Mischung in dem ersten Reaktor bei einer ersten Temperatur (T1) für einen ersten Zeitraum (t1) unter Erhalt einer Flüssigphase und eines ersten Gasstroms, wobei die Flüssigphase eine gegorene Mischung enthält und der erste Gasstrom Kohlenstoffdioxid enthält,
iii. Überführen des in Schritt ii) erhaltenen ersten Gasstroms aus dem ersten Reaktor in einen ersten Kondensator, wobei der erste Gasstrom von der in Schritt ii) erhaltenen Flüssigphase abgetrennt wird unter Erhalt der gegorenen Mischung in dem ersten Reaktor und des ersten Gasstroms in dem ersten Kondensator, wobei der erste Gasstrom die in Schritt a) bereitgestellte Mischung ist.

Unter einer "gärfähigen Mischung" wird im Rahmen der vorliegenden Erfindung eine Mischung verstanden, die Kohlenhydrate, insbesondere Zucker und/oder Stärke enthält, die in einem enzymatischen Prozess unter anoxischen Bedingungen zu Ethanol und Kohlenstoffdioxid abgebaut werden können. Bevorzugt kann die gärfähige Mischung der alkoholischen Gärung unterzogen werden.

Die erste Temperatur (T1) liegt beispielsweise im Bereich von 5 °C bis 50 °C, bevorzugt im Bereich von 15 °C bis 45 °C, insbesondere bevorzugt im Bereich von 30 °C bis 35 °C. Es ist außerdem möglich, die erste Temperatur (T1) über den ersten Zeitraum (t1) zu variieren.

Der erste Zeitraum (t1) liegt beispielsweise in einem Bereich von einer Stunde bis sechs Monaten, bevorzugt im Bereich von fünf Stunden bis einen Monat, insbesondere bevorzugt im Bereich von einem Tag bis zehn Tagen.

Insbesondere wenn die Mischung durch ein Verfahren umfassend die Schritte i) bis iii) bereitgestellt wird, enthält die Mischung vorzugsweise im Bereich von 60 bis 90 Vol.-%, besonders bevorzugt im Bereich von 70 bis 85 Vol.-%, Alkohol, vorzugsweise Ethanol, bezogen auf das Gesamtvolumen der Mischung. In diesem Falle enthält die Mischung bevorzugt im Bereich10 bis 40 Vol.-%, besonders bevorzugt im Bereich von 15 bis 30 Vol.-% einer Mischung aus dem mindestens einen weiteren Bestandteil und Wasser, bezogen auf das Gesamtvolumen der Mischung.

In Schritt b) wird die in Schritt a) bereitgestellte Mischung mit einem Zeolithen in Kontakt gebracht unter Erhalt eines Stroms, der zumindest Teile des mindestens einen weiteren Bestandteils enthält.

In Schritt b) wird üblicherweise der Alkohol zumindest teilweise von zumindest einem Teil des mindestens einen weiteren Bestandteils abgetrennt unter Erhalt des Stroms. Bevorzugt wird der in der Mischung enthaltene Alkohol in Schritt b) zumindest teilweise an dem Zeolithen adsorbiert und dadurch zumindest teilweise von zumindest Teilen des mindestens einen weiteren Bestandteils abgetrennt. Vorzugsweise wird der Alkohol im Wesentlichen vollständig an dem Zeolithen adsorbiert und so von zumindest Teilen des mindestens einen weiteren Bestandteils abgetrennt unter Erhalt des Stroms. Der mindestens eine weitere Bestandteil kann dann beispielsweise in einem Gasstrom wie CO₂ oder N₂ vorliegen. Alternativ kann er auch in Wasser gelöst sein.

In einer weiteren Ausführungsform der Erfindung wird der Alkohol in Schritt b) nur teilweise am Zeolithen adsorbiert. Ein Rest des Alkohols wird im Strom, der zumindest einen Teil des mindestens einen Bestandteils enthält, erhalten. Der Strom enthält dann also zumindest einen Teil des mindestens einen weiteren Bestandteils und Reste des Alkohols. Diese Ausführungsform ist besonders vorteilhaft, da die Reste des Alkohols den mindestens einen weiteren Bestandteil binden können, sodass dessen Flüchtigkeit reduziert und damit die Stabilität und Lagerfähigkeit des Stroms verbessert wird. Zudem ist der Strom dann auch zu einem späteren Zeitpunkt gut dosierbar. Darüber hinaus verbessert der Alkohol die Löslichkeit und wirkt antimikrobiell. Zudem erlaubt er durch die Volumenvergrößerung des Stroms eine bessere Dosierung.

Bevorzugt ist daher auch ein Verfahren, bei dem in Schritt b) der Alkohol an dem Zeolithen adsorbiert und dadurch von zumindest Teilen des mindestens einen weiteren Bestandteils des Stroms abgetrennt wird.

Beispielsweise enthält der Strom 0 Vol.-% des Alkohols, bevorzugt Ethanol. Es ist weiterhin möglich, dass der Strom beispielsweise im Bereich von 10 bis 40 Vol.%, bevorzugt im Bereich von 15 bis 30 Vol.-% und besonders bevorzugt etwa 20 Vol.-% des Alkohols, bevorzugt Ethanol enthält, jeweils bezogen auf das Gesamtvolumen des Stroms.

Es ist besonders vorteilhaft, wenn der Zeolith den Alkohol adsorbiert, da dadurch der mindestens eine weitere Bestandteil im Wesentlichen unverändert im Strom erhalten wird.

Als Zeolith in Schritt b) eignen sich alle dem Fachmann bekannten Zeolithe, die den Alkohol adsorbieren. Bevorzugt haben die Zeolithe eine Porengröße im Bereich von 3 A (Angstrom) bis 5 A, besonders bevorzugt im Bereich von 4,2 bis 4,6 A.

Beispielsweise ist der Zeolith in Schritt b) ausgewählt aus der Gruppe bestehend aus Zeolith 4A, Zeolith 5A, AIPO-11, AIPO-41, ITQ-52, SAPO-34, Zeolith Beta, Zeolith 13X, ZSM-5, Ferrierite, Heulandite, Klinoptilolith, Mordenit und Silikazeolith.

Besonders bevorzugt ist der Zeolith in Schritt b) ausgewählt aus der Gruppe bestehend aus Zeolith 4A und Zeolith 5A.

Bevorzugt ist daher auch ein Verfahren bei dem der Zeolith in Schritt b) ausgewählt ist aus der Gruppe bestehend aus Zeolith 4A, Zeolith 5A, AIPO-11, AIPO-41, ITQ-52, SAPO-34, Zeolith Beta, Zeolith 13X, ZSM-5, Ferrierite, Heulandite, Klinoptilolith, Mordenit und Silikazeolith.

Die Mischung kann mit dem Zeolithen in flüssiger oder gasförmiger Form in Kontakt gebracht werden. Bevorzugt wird die Mischung in demselben Aggregatzustand mit dem Zeolithen in Kontakt gebracht, in dem die Mischung in Schritt a) bereitgestellt wurde. Besonders bevorzugt wird die Mischung mit dem Zeolithen in gasförmiger Form in Kontakt gebracht.

Bevorzugt ist daher auch ein Verfahren, bei dem die Mischung in flüssiger oder gasförmiger Form in Schritt b) mit dem Zeolithen in Kontakt gebracht wird.

Das Inkontaktbringen in Schritt b) kann beispielweise bei einer Temperatur im Bereich von -30°C bis +100°C stattfinden. Beispielsweise liegt der Druck beim Inkontaktbringen in Schritt b) im Bereich von 0,001 bar bis 10 bar.

Bevorzugt ist daher auch ein Verfahren, bei dem das Inkontaktbringen in Schritt b) bei einer Temperatur im Bereich von -30 °C bis +100°C und einem Druck im Bereich von 0,001 bar bis 10 bar stattfindet.

In Schritt c) wird zumindest ein Teil des in Schritt b) erhaltenen Stroms mit einem zumindest teilweise entalkoholisierten Getränk gemischt unter Erhalt eines aromatisierten zumindest teilweise entalkoholisierten Getränks.

Beispielsweise werden üblicherweise höchstens 1 Vol.-% des Stroms mit dem zumindest teilweise entalkoholisierten Getränk gemischt, bezogen auf das Gesamtvolumen des zumindest teilweise entalkoholisierten Getränks.

Unter einem zumindest teilweise entalkoholisierten Getränk wird ein Getränk verstanden, während dessen Herstellverfahren Alkohol gebildet wird und das daher üblicherweise Alkohol enthält und aus dem in einem Entalkoholisierungsverfahren der Alkohol zumindest teilweise entfernt wird.

Beispielsweise ist das entalkoholisierte Getränk ausgewählt aus der Gruppe bestehend aus zumindest teilweise entalkoholisiertem Wein, zumindest teilweise entalkoholisiertem Bier und zumindest teilweise entalkoholisierten Spirituosen.

Bevorzugt ist daher auch ein Verfahren, bei dem das zumindest teilweise entalkoholisierte Getränk in Schritt c) ausgewählt ist aus der Gruppe bestehend aus zumindest teilweise entalkoholisiertem Wein, zumindest teilweise entalkoholisiertem Bier und zumindest teilweise entalkoholisierten Spirituosen.

Beispielsweise enthält das zumindest teilweise entalkoholisierte Getränk höchstens 0,5 Vol.-% eines Alkohols, insbesondere Ethanol, bezogen auf das Gesamtvolumen des zumindest teilweise entalkoholisierten Getränks.

Vorzugsweise enthält das zumindest teilweise entalkoholisierte Getränk höchstens 0,5 Vol.-% eines Alkohols, insbesondere Ethanol, bezogen auf das Gesamtvolumen des zumindest teilweise entalkoholisierten Getränks. Besonders bevorzugt ist das zumindest teilweise entalkoholisierte Getränk im Wesentlichen vollständig entalkoholisiert. Unter "im Wesentlichen vollständig entalkoholisiert" wird im Rahmen der vorliegenden Erfindung verstanden, dass das zumindest teilweise entalkoholisierte Getränk höchstens 0,5 Vol.-% eines Alkohols, insbesondere Ethanol, enthält, bezogen auf das Gesamtvolumen des zumindest teilweise entalkoholisierten Getränks.

Bevorzugt ist daher auch ein Verfahren, bei dem das zumindest teilweise entalkoholisierte Getränk in Schritt c) im Wesentlichen vollständig entalkoholisiert ist.

Verfahren zur Herstellung von zumindest teilweise entalkoholisierten Getränken sind dem Fachmann als solche bekannt und beispielsweise in Lisanti et al, Food Bioprocess Technol (2013) 6:2289-2305 beschrieben.

Das zumindest teilweise entalkoholisierte Getränk, mit dem zumindest ein Teil des in Schritt b) erhaltene Strom gemischt werden kann, kann beispielsweise auch mit einem Aromastoffkonzentrat wie beispielsweise in DE 10 2016 105 993 A1 beschrieben angereichert werden. Diese Anreicherung kann vor oder nach dem Mischen mit zumindest einem Teil des in Schritt b) erhaltenen Stroms erfolgen.

In einer Ausführungsform ist das zumindest teilweise entalkoholisierte Getränk erhältlich durch in Kontakt bringen eines alkoholhaltigen Getränks mit einem weiteren Zeolithen.

Bevorzugt ist auch ein Verfahren, bei dem das zumindest teilweise entalkoholisierte Getränk erhältlich ist durch in Kontakt bringen eines alkoholhaltigen Getränks mit einem weiteren Zeolithen.

Als weiterer Zeolith eignen sich Zeolithen, die das Abtrennen von Alkohol ermöglichen.

Bevorzugt ist daher auch ein Verfahren, bei dem der weitere Zeolith ausgewählt ist aus der Gruppe bestehend aus Zeolith 4A, Zeolith 5A, AIPO-11, AIPO-41, ITQ-52, SAPO-34, Zeolith Beta, Zeolith 13X, ZSM-5, Ferrierite, Heulandite, Klinoptilolith, Mordenit und Silikazeolith.

Das alkoholhaltige Getränk, aus dem der Alkohol zur Herstellung des entalkoholisierten Getränks abgetrennt wird, ist beispielsweise ausgewählt aus der Gruppe bestehend aus Weinen, Bieren und Spirituosen.

Beispielsweise können mit dem erfindungsgemäßen Verfahren aus Gärgasen von 100 Litern Most etwa 10 Liter entalkoholisierter Wein aromatisiert werden.

Im erfindungsgemäßen Verfahren wird ein aromatisiertes zumindest teilweise entalkoholisiertes Getränk erhalten.

Gegenstand der vorliegenden Erfindung ist daher auch ein aromatisiertes zumindest teilweise entalkoholisiertes Getränk erhältlich nach dem erfindungsgemäßen Verfahren.

Das erfindungsgemäß hergestellte aromatisierte zumindest teilweise entalkoholisierte Getränk weist einen verbesserten Geruch und Geschmack gegenüber nicht aromatisierten entalkoholisierten Getränken auf.

## Patentansprüche

1. Verfahren zur Aromatisierung eines zumindest teilweise entalkoholisierten Getränks umfassend die folgenden Schritte a) bis c)
a) Bereitstellen einer Mischung enthaltend einen Alkohol und mindestens einen weiteren Bestandteil ausgewählt aus der Gruppe bestehend aus Alkoholen, Terpenoiden, Estern, Aldehyden, Ketonen, Pyrazinen und Thiolen,
b) in Kontakt bringen der in Schritt a) bereitgestellten Mischung mit einem Zeolithen unter Erhalt eines Stroms, der zumindest Teile des mindestens einen weiteren Bestandteils enthält,
c) Mischen von zumindest einem Teil des in Schritt b) erhaltenen Stroms mit einem zumindest teilweise entalkoholisierten Getränk unter Erhalt eines aromatisierten zumindest teilweise entalkoholisierten Getränks.

2. Verfahren gemäß Anspruch 1, **dadurch gekennzeichnet, dass** der Alkohol in Schritt a) Ethanol ist.

3. Verfahren gemäß Anspruch 1 oder 2, **dadurch gekennzeichnet, dass** der Zeolith in Schritt b) ausgewählt ist aus der Gruppe bestehend aus Zeolith 4A, Zeolith 5A, AIPO-11, AIPO-41, ITQ-52, SAPO-34, Zeolith Beta, Zeolith 13X, ZSM-5, Ferrierite, Heulandite, Klinoptilolith, Mordenit und Silikazeolith.

4. Verfahren gemäß einem der Ansprüche 1 bis 3, **dadurch gekennzeichnet, dass** die Mischung in flüssiger oder gasförmiger Form in Schritt b) mit dem Zeolithen in Kontakt gebracht wird.

5. Verfahren gemäß einem der Ansprüche 1 bis 4, **dadurch gekennzeichnet, dass** das Inkontaktbringen in Schritt b) bei einer Temperatur im Bereich von -30 °C bis +100°C und einem Druck im Bereich von 0,001 bar bis 10 bar stattfindet.

6. Verfahren gemäß einem der Ansprüche 1 bis 5, **dadurch gekennzeichnet, dass** in Schritt b) der Alkohol an dem Zeolithen adsorbiert und dadurch von zumindest Teilen des mindestens einen weiteren Bestandteils des Stroms abgetrennt wird.

7. Verfahren gemäß einem der Ansprüche 1 bis 6, **dadurch gekennzeichnet, dass** das zumindest teilweise entalkoholisierte Getränk in Schritt c) ausgewählt ist aus der Gruppe bestehend aus zumindest teilweise entalkoholisiertem Wein, zumindest teilweise entalkoholisiertem Bier und zumindest teilweise entalkoholisierten Spirituosen.

8. Verfahren gemäß einem der Ansprüche 1 bis 7, **dadurch gekennzeichnet, dass** das zumindest teilweise entalkoholisierte Getränk in Schritt c) im Wesentlichen vollständig entalkoholisiert ist.

9. Verfahren gemäß einem der Ansprüche 1 bis 8, **dadurch gekennzeichnet, dass** das zumindest teilweise entalkoholisierte Getränk erhältlich ist durch in Kontakt bringen eines alkoholhaltigen Getränks mit einem weiteren Zeolithen.

10. Verfahren gemäß Anspruch 9, **dadurch gekennzeichnet, dass** der weitere Zeolith ausgewählt ist aus der Gruppe bestehend aus Zeolith 4A, Zeolith 5A, AIPO-11, AIPO-41, ITQ-52, SAPO-34, Zeolith Beta, Zeolith 13X, ZSM-5, Ferrierite, Heulandite, Klinoptilolith, Mordenit und Silikazeolith.

11. Verfahren gemäß einem der Ansprüche 1 bis 10, **dadurch gekennzeichnet, dass** die Mischung in Schritt a) erhältlich ist durch ein Verfahren umfassend die folgenden Schritte i) bis iii)
i. Bereitstellen einer gärfähigen Mischung in einem ersten Reaktor,
ii. Gärung der in Schritt i) bereitgestellten gärfähigen Mischung in dem ersten Reaktor bei einer ersten Temperatur (T1) für einen ersten Zeitraum (t1) unter Erhalt einer Flüssigphase und eines ersten Gasstroms, wobei die Flüssigphase eine gegorene Mischung enthält und der erste Gasstrom Kohlenstoffdioxid enthält,
iii. Überführen des in Schritt ii) erhaltenen ersten Gasstroms aus dem ersten Reaktor in einen ersten Kondensator, wobei der erste Gasstrom von der in Schritt ii) erhaltenen Flüssigphase abgetrennt wird unter Erhalt der gegorenen Mischung in dem ersten Reaktor und des ersten Gasstroms in dem ersten Kondensator, wobei der erste Gasstrom die in Schritt a) bereitgestellte Mischung ist.

12. Aromatisiertes zumindest teilweise entalkoholisiertes Getränk erhältlich nach einem Verfahren gemäß einem der Ansprüche 1 bis 11.
